Europäisches Patentamt

European Patent Office

Office européen des brevets

(19)

(11) Publication number: **0 298 900**
**A1**

(12) # EUROPEAN PATENT APPLICATION

(21) Application number: **88630132.4**

(22) Date of filing: **11.07.88**

(51) Int. Cl.⁴: **A 47 J 37/12**
**G 07 F 9/10, G 07 F 11/70**

(30) Priority: **10.07.87 AU 3073/87**

(43) Date of publication of application:
**11.01.89 Bulletin 89/02**

(84) Designated Contracting States:
**AT BE CH DE ES FR GB GR IT LI LU NL SE**

(71) Applicant: **Scott, Richard Ambrose**
**899 Whitehorse Road**
**Box Hill Victoria 3128 (AU)**

**Sleep, Peter James**
**899 Whitehorse Road**
**Box Hill Victoria 3128 (AU)**

(72) Inventor: **Scott, Richard Ambrose**
**899 Whitehorse Road**
**Box Hill Victoria 3128 (AU)**

**Sleep, Peter James**
**899 Whitehorse Road**
**Box Hill Victoria 3128 (AU)**

(74) Representative: **Weydert, Robert et al**
**OFFICE DENNEMEYER S.à.r.l. P.O. Box 1502**
**L-1015 Luxembourg (LU)**

(54) **Vending machine for hot pommes frites.**

(57) A vending machine (10) for pommes frites has a refrigerated hopper (30) for holding uncooked pommes frites, a volumetric dispenser (40) for dispensing a selected volume of uncooked pommes frites to cooking apparatus (76), and a dispenser (92) for cups to hold cooked pommes frites. Control means (104) operates the various elements of the machine in a standby mode during selected time periods, during which the introduction of a selected amount of currency to a coin acceptor (96) causes the control means (104) to order dispensing of uncooked frites, the raising of the temperature of cooking oil in the cooking apparatus, the holding of the pommes frites in said oil for a predetermined time, dispensing of a cup and the dispensing of pommes frites into the cup.

Fig 2

EP 0 298 900 A1

Bundesdruckerei Berlin

## Description

This invention relates to apparatus for the production of hot foods, and in particular relates to a vending machine for hot pommes frites.

Pomme frites (known also as chips or French fries) are popular throughout the world. They are small pieces of potato fried in oil until they are a golden brown, and are subsequently often garnished with salt and/or vinegar or mayonnaise.

Although the potato pieces are often partially pre-cooked and stored in a refrigerated or frozen condition, it is a fact that in order for chips to be acceptable to the consuming public, the final cooking step must be carried out immediately before consumption; the freshly-cooked flavour cannot be reproduced by microwave heating or the like.

Thus, pommes frites have only been available from outlets where people are available to cook and/or serve them. In some franchised fast-food outlets, French fries are cooked in a partially automatic manner, with audible tones advising staff that a particular batch has been cooking for a predetermined time. However, such systems rely on people to load the chips into baskets, place the baskets into hot oil, remove the baskets therefrom, and dispense them into containers.

Clearly, at times when penalty rates would be payable, it is difficult to obtain pommes frites as a fast food, Some automated apparatus for producing them was clearly needed. In AU-A-65791/86 there is provided a cooking and dispensing vending machine for hot chips. However, in use machines produced in accordance with the invention described in that application have proved to be extremely troublesome.

It is an object of this invention to provide an improved automated fast food apparatus.

The invention provide apparatus (10) for dispensing hot fried food, characterized by cold storage means (30) for uncooked food pieces, cooking means (76) for frying said food pieces, volumetric dispensing means (40) for dispensing food pieces to said cooking means (76), container dispensing means (92) for dispensing containers to a station (102) where they may be supplied with cooked food pieces, food dispensing means (80) for dispensing cooked food pieces to one of said containers, and control means (104) for controlling the operation of said cooking means (76), volumetric dispensing means (40), and food dispensing means.

A preferred embodiment of the invention will be described in detail hereinafter, with reference to the accompanying drawings, in which:-

Figure 1 is a front elevation of one embodiment of a hot chip vending machine in accordance with the present invention;

Figure 2 is an exploded perspective view of the machine of Figure 1, with the door open and with certain components not shown;

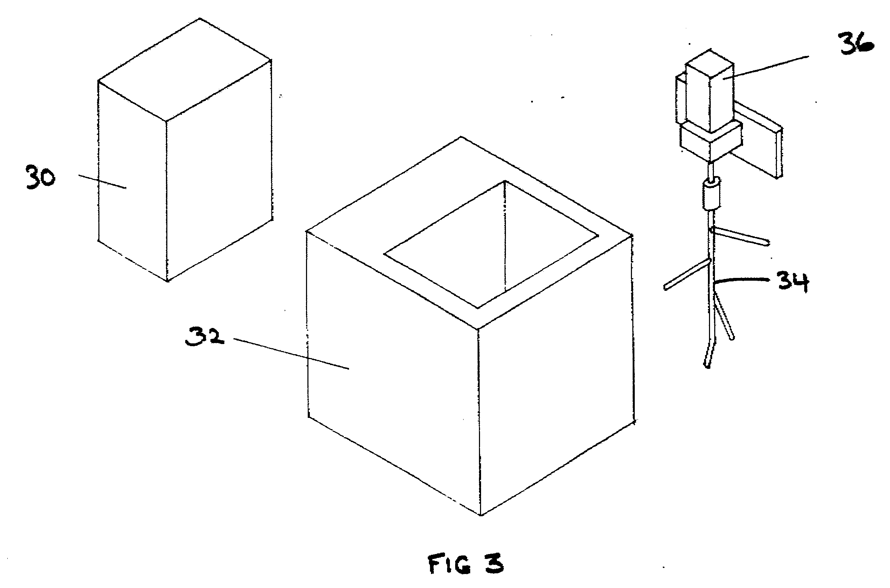

Figure 3 is a perspective view of components of the uncooked chip storage means;

Figure 4 is a perspective view of cooking means; and

Figure 5 is a perspective view of cooking means and control means.

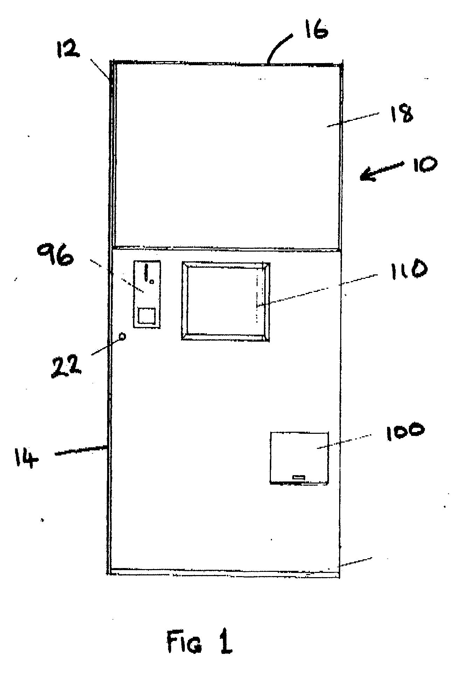

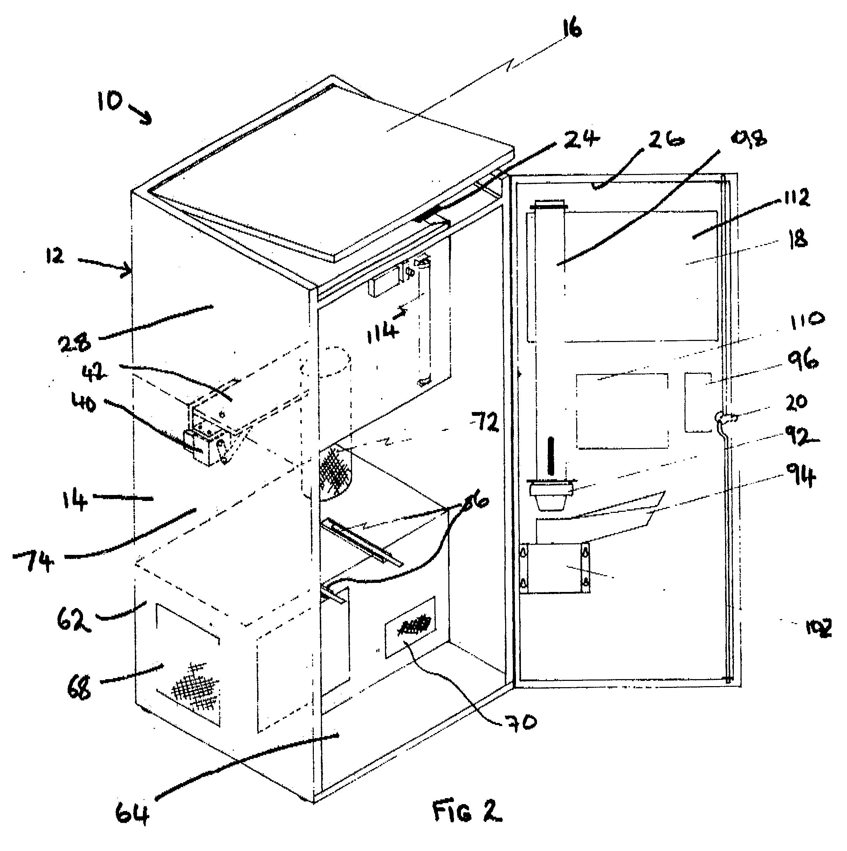

Dealing firstly with Figures 1 and 2, the hot chip vending machine 10 includes a cuboidal cabinet 12 having a main body portion 14, a horizontally hinged top 16 and a vertically hinged front door 18. Panels at the back (not shown) may be removed for access to components to be described hereinafter.

Door 18 has a conventional locking mechanism 20 which is key-operated at 22. Top 16 may be locked by closing and locking door 18, as top 16 is provided with a tongue 24 which is trapped under top lip 26 of door 18 when the door 18 is closed. The entire cabinet should be made of strong materials and in a strong manner to resist damage through vandalism.

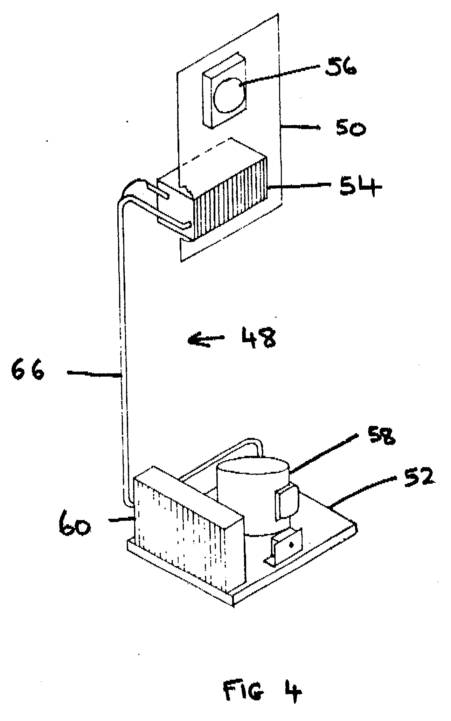

In the top portion 28 of the interior of cabinet 12 is located the pommes frites storage and dispensing means shown in Figure 2. There is a chip hopper 30 which is located in a 'no-frost' insulated refrigerator box 32. Hopper 30 has, preferably, a non-stick interior surface, using a material such as PTFE. Details of the refrigeration system will be described hereinafter in relation to Figure 4.

The hopper is kept, preferably, at a temperature of approximately -5°C to -7°C. It has the capacity to hold approximately 135 200g groups of chips. A slowly-rotating agitator 34 driven by a motor 36 encased in a PVC cover, which agitator 34 is suspended in the hopper 30, prevents the frozen pommes frites from adhering to each other.

Frozen chips are delivered from the hopper 30 through an aperture (not shown) in the base thereof by a volumetric dispenser 40. The dispenser 40 comprises a horizontally-displaceable plate 42 carrying a cylindrical element (not shown) which has a predetermined volume. In a first position, the open top of the element is in register with the aperture at the base of hopper 30, but with its open lower end blocked by a fixed plate (not shown). In a second position the lower end is in register with an aperture in said plate, and can deliver the chips by gravity through that aperture. The dispenser acts to deliver only the volume of chips contained in the cylindrical element. The sliding plate is operated by an electric motor 44 operating a lever system 46, and is controlled in a manner to be described hereinafter.

Turning now to Figure 4, the refrigerating system 48 comprises two parts 50 and 52. Upper part 50 is a no-frost evaporative unit comprising an evaporator 54 and a fan 56, and is located in housing 32. Lower part 52 consists of a compressor 58 and a condenser 60, and is located in housing 62 in lower portion 64 of the interior of cabinet 12.

Conduits 66 circulate refrigerating fluid between parts 52 and 54. On housing 62 are located vents 68, 70, and a generally cylindrical air filter 72 is located on top of housing 62 in intermediate portion 74 of the interior of cabinet 12.

Air filter 72 contains a special carbon-impregnated material which successfully eliminates odour and fumes generated in the interior of the cabinet 12 from the cooking operation, to be described hereinafter. A fan, not shown draws air from the interior via filter 72 or pumps air into the interior by virtue of vent 70. Either way, fume-laded air exits via filter 72, and some fresh air is introduced into housing 62 through vent 68. This prevents the refrigerating part 52 from being subjected to air of a higher temperature, passing through filter 72.

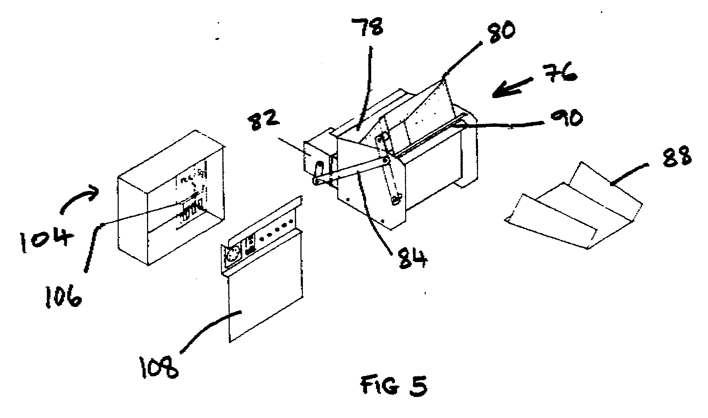

The chip cooking apparatus 76 (Figure 5) is located in intermediate portion 74 of the cabinet interior and includes a container 78 filled with cooking oil and including an electrical heating element (not shown) which can be easily removed from the container. There is a chip-frying basket 80 which is adapted for movement between a first (cooking) position, a second (draining/standby) position and a third (dispensing) position. The movement of the basket is effected by an electric motor 82, operating a lever system 84. The basket may be easily removed from the lever system 84, and the entire apparatus 76 may be slid forward on slides 86 (Figure 2) to allow the unit to be disassembled. The container 78 and basket are preferably made from stainless steel and it is preferred that the basket be made from apertured plate, rather then from wire, to prevent small cooked particles from gathering in the container 78. A thermostat (not shown) monitors the temperature of the oil.

In Figure 5, the basket 80 is shown in its second (draining/standby) position. Anticlockwise rotation takes it to the first position, whilst clockwise rotation takes it to the dispensing position, in which it disgorges chips to first chute 88 which is removably attached to the front 90 of apparatus 76. A drip tray may be installed beneath first chute 88 in order to collect any oil which may drip from the chute.

Returning now to Figure 2, there are located on the inside of door 18 a cup dispenser 92, a second chute 94 and a coin acceptor 96. Cup dispenser 92 includes a cylindrical store 98 which may be filled from the top with waxed cardboard cups. Preferably store 98 is sealed from the atmosphere within the interior of cabinet 12. At the base there is an electrically-operated device for dispensing cups one at a time to a holder (not shown) located in access opening 100 (Figure 1) which may be fitted with a sliding door, preferably of a transparent material.

Second chute 94 is removably located on door 18, by being located on a plate 102 with 'keyhole' apertures which located on screwheads or the like. Chute 94 is adapted to direct chips into a container held in the holder, and when door 18 is closed first chute 88 is adapted to deliver chips to second chute 94.

The coin acceptor 96 is of the type that may be programmed to recognise and accept all coins at present in circulation in a particular country, so that a person would not require exact change in exact denominations to use the machine. Alternatively, it could be programmed to only accept a token, for example, which tokens could be bought elsewhere and may be, for example, existing tokens such as ferry tokens.

The operations of the various components are governed by a control system 104, (Figure 5) located within housing 62. The main component is an integral printed circuit logic board 106. A front panel 108 enables adjustments to be made to the programming.

Finally, front door 18 includes a clear-view panel 110, which allows a user to watch the chips being cooked and dispensed. A panel 112 is provided on door 18 for advertising material, which may be back-lit by a fluorescent tube 114.

Before the operation of the machine 10 is described, some points must be mentioned. The machine has a 'standby' mode, in which the cooking oil in vat 78 is maintained at a temperature low enough to avoid danger, but high enough to allow the oil to be brought to cooking temperature (approximately 190°C) in a very short period of time. A time clock, forming part of control system 104, may be set so that this standby mode is only in effect for a limited time, 9am to 5pm for example, where the unit may be stationed outside a sandwich bar or the like. (It should be mentioned here that in such a location the cabinet 12 would be fitted with castors or the like to allow it to be rolled into the shop for security).

However, for a location such as an airport terminal, one would wish the machine to be in standby mode 24 hours per day. Of course, the refrigerator operates 24 hours per day unaffected by the control system.

Thus, the hopper 30 is filled with frozen or cold chips, preferably partly-cooked. Vat 78 is filled with oil, and cup dispenser 98 is filled with cups. The door 18 is closed and locked, and let us assume that the machine is in a standby mode. The temperature of the oil in the vat 78 is governed by the thermostat and the control system.

Thus, a customer comes to the machine 10, sees (from illuminated panel 112 or elsewhere on the machine) that a bucket of pommes frites is, say 1.50. He feeds in coins to that amount to acceptor 96. A number of things then happen as a result of a signal being received from acceptor 96 by control system 104. Control system 104 instructs a solenoid or the like on bucket/cup dispenser 98, to actuate a mechanism to drop one cup into the holder. The control system also instructs the heating element to bring the cooking oil temperature to the approximately 190°C discussed earlier. The control system 104 also operates agitator 34, and causes the volumetric dispenser to deliver a metered volume of chips (which have been separated, if necessary, by agitator 34) into basket 80, which is in the standby position.

When the oil is at the required temperature, the control system 104 causes the basket 80 to move to the frying position and causes that position to be maintained for a predetermined time (preferably in the order of 50 to 60 seconds) before returning the basket to the standby position, where it is held for a second predetermined time, until much of the oil has drained from the cooked chips back into the vat 78. The control system 104 then causes the basket 80 to move to the dispensing position. Cooked chips move under the influence of gravity into first chute 88, into second chute 94 and then into the bucket or cup.

The bucket may then be removed from the access opening 100 and the chips consumed. The machine 10 will then return to the standby mode.

Preferably, provision is made to add 'extras' such as salt, vinegar, mayonnaise or tomato sauce. One could have a dispenser of packages of such substances in the vicinity of or attached to, machine 10.

The preferred cooking oil is cottonseed oil.

It can be seen that the present invention provides an improved automated vending machine for hot pommes frites.

## Claims

1. Apparatus (10) for dispensing hot fried food, characterized by cold storage means (30) for uncooked food pieces, cooking means (76) for frying said food pieces, volumetric dispensing means (40) for dispensing food pieces to said cooking means (76), container dispensing means (92) for dispensing containers to a station (102) where they may be supplied with cooked food pieces, food dispensing means (80) for dispensing cooked food pieces to one of said containers, and control means (104) for controlling the operation of said cooking means (76), volumetric dispensing means (40), and food dispensing means.

2. Apparatus (10) according to claim 1 characterized by ventilation and air filtration means (70, 72) for removal of cooking vapours from the interior of said apparatus (10).

3. Apparatus (10) according to claim 1, characterized in that said control means (104) is adjustable and/or programmable.

4. Apparatus (10) according to claim 1, characterized in that there is a coin or token acceptor means (96) which sends a signal to said control means (104) when coins and/or tokens to a predetermined value have been introduced therein, said signal causing said control means to initiate a cycle of production of cooked food pieces.

5. Apparatus (10) according to claim 4, characterized in that said cooking means (76) includes a bath of oil (78) which is held at a first, standby temperature during predetermined time periods when access to said coin acceptor (96) is possible, and at a second, cooking, temperature during a predetermined cooking time period, a basket (80) into which food pieces are dispensed, said basket being mounted for movement between a first position in which it is located in said bath, a second position in which it is located outside said bath in a standby/draining mode, and a third position where cooked food pieces may be dispensed under the influence of gravity.

6. Apparatus (10) according to claim 1, characterized in that said apparatus is in the form of a vending machine cabinet with a window (110) through which at least some of the operations of the apparatus (10) may be viewed.

7. Apparatus (10) according to claim 1, characterized in that said volumetric dispensing means (40) includes an element defining a selected volume, said element having an open top and an open bottom, and a plate adapted to locate beneath said element to close said open bottom when food pieces are dispensed from said storage means, and being adapted to move to open said bottom to dispense said volume of food pieces into said cooking means (76).

8. Apparatus according to claim 1, characterized in that the food pieces are pommes frites.

Fig 1

0298900

FIG 2

30

32

36

34

FIG 3

0298900

0298900

FIG 4

0298900

FIG 5

## DOCUMENTS CONSIDERED TO BE RELEVANT

EP 88630132.4

| Category | Citation of document with indication, where appropriate, of relevant passages | Relevant to claim | CLASSIFICATION OF THE APPLICATION (Int. Cl 4) |
|---|---|---|---|
| Y | US - A - 4 586 429 (HAWKINS) | 1,4,8 | A 47 J 37/12 |
| A | * Totality * | 2,5 | G 07 F 9/10 |
| | -- | | G 07 F 11/70 |
| Y | US - A - 3 667 373 (SICHER et al.) | 1,4,8 | |
| A | * Totality * | 5 | |
| | -- | | |
| A | US - A - 3 385 204 (RICHARDSON) <br> * Column 3, lines 10-34; column 5, lines 45-58; fig. 1,2 * | 7 | |
| | -- | | |
| A | GB - A - 2 063 654 (WOKINGHAM ENGINEERING SERVICES LIMITED) <br> * Totality * | 1,5,6 | |
| | -- | | **TECHNICAL FIELDS SEARCHED (Int. Cl.4)** |
| A | AU - B - 11 708/83 (PRECISION FRY FOODS (S.A.) PTY. LTD.) <br> * Totality * | 1,5,8 | A 47 J 27/00 <br> A 47 J 37/00 <br> G 07 F 9/00 |
| | -- | | |
| A | GB - A - 2 089 648 (WOKINGHAM ENGINEERING SERVICES LIMITED) <br> * Totality * | 1,5,8 | G 07 F 11/00 <br> G 07 F 13/00 |
| | -- | | |
| A | US - A - 3 690 247 (VAN CLEVEN et al.) <br> * Totality * | 1,2,4, 5,8 | |
| | -- | | |

The present search report has been drawn up for all claims

| Place of search | Date of completion of the search | Examiner |
|---|---|---|
| VIENNA | 28-09-1988 | BEHMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| DOCUMENTS CONSIDERED TO BE RELEVANT | | EP 88630132.4 |

| Category | Citation of document with indication, where appropriate, of relevant passages | Relevant to claim | CLASSIFICATION OF THE APPLICATION (Int. Cl 4) |
|---|---|---|---|
| A | US - A - 4 359 935 (MURRAY) <br> * Totality * <br> -- | 1,2,4, 5,7,8 | |
| A | FR - A1 - 2 491 031 (GIDECO) <br> * Totality * <br> -- | 1,2,4, 5,8 | |
| A | US - A - 3 818 820 (HARRIS et al.) <br> * Totality * <br> -- | 1,2,4, 5,8 | |
| A | US - A - 4 505 194 (BISHOP et al.) <br> * Totality * <br> -- | 1,2 | |
| A | FR - A1 - 2 453 628 (MOMAL et al.) <br> * Totality * <br> -- | 1,2 | |
| A | AU - B - 77 603/81 (WILLIAMS et al.) <br> * Totality * <br> -- | 1,5 | **TECHNICAL FIELDS SEARCHED (Int. Cl.4)** |
| A | WO - A1 - 86/07 648 (HOEBERIGS) <br> * Totality * <br> -- | 1 | |
| A | WO - A1 - 83/02 883 (PRIZE FRIZE INC.) <br> * Totality * <br> -- | 1 | |

The present search report has been drawn up for all claims

| Place of search | Date of completion of the search | Examiner |
|---|---|---|
| VIENNA | 28-09-1988 | BEHMER |

## European Patent Office

**EUROPEAN SEARCH REPORT**

Application number

| DOCUMENTS CONSIDERED TO BE RELEVANT | EP 88630132.4 |

| Category | Citation of document with indication, where appropriate, of relevant passages | Relevant to claim | CLASSIFICATION OF THE APPLICATION (Int. Cl.4) |
|---|---|---|---|
| A | US - A - 3 896 715 (MASCRET) <br> * Totality * | 1 | |
| A | US - A - 2 911 903 (CHIRONIS) <br> * Totality * | 1 | |
| A | FR - A1 - 2 589 607 (MARCO) <br> * Totality * | 1 | |
| A | GB - A - 2 146 888 (TEPCO (UK) LIMITED) <br> * Totality * | 2 | |
| A | US - A - 4 649 810 (WONG) <br> * Totality * | 3 | TECHNICAL FIELDS SEARCHED (Int. Cl.4) |
| A | US - A - 2 074 044 (BUSHWAY) <br> * Totality * | 5 | |

The present search report has been drawn up for all claims

| Place of search | Date of completion of the search | Examiner |
|---|---|---|
| VIENNA | 28-09-1988 | BEHMER |